# EUROPÄISCHE PATENTSCHRIFT

(11) **EP 3 476 778 B1**
(45) Veröffentlichungstag und Bekanntmachung des Hinweises auf die Patenterteilung: **02.09.2020**
(21) Anmeldenummer: 17001775.0
(22) Anmeldetag: 27.10.2017
(51) Int. Cl.: B65G 47/248, G01M 17/02

(54) **VORRICHTUNG UND VERFAHREN ZUM HANDHABEN VON REIFEN**
METHOD AND DEVICE FOR HANDLING TYRES
DISPOSITIF ET PROCÉDÉ DESTINÉS À LA MANIPULATION DE PNEUMATIQUES

(43) Veröffentlichungstag der Anmeldung: 01.05.2019
(73) Patentinhaber: Gawronski GmbH, 73765 Neuhausen (DE)
(72) Erfinder: Wojciech, Skiba, 7661 Phillippsburg (DE)
(74) Vertreter: mepat Patentanwälte

(56) Entgegenhaltungen:
- EP-A2- 1 116 944
- WO-A1-2004/031717
- CN-A- 106 743 433
- CN-A- 107 055 050
- US-A- 4 013 177
- US-A1- 2014 294 552

## Beschreibung

Die Erfindung betrifft eine Vorrichtung und ein Verfahren um Reifen zu handhaben, beispielsweise, um sie zu identifizieren.

Aus dem Stand der Technik sind Vorrichtungen zum Handhaben und Identifizieren von Reifen, die mit einem Barcode-Sticker oder einem RFID-Transponder markiert sind, bekannt, die eine automatisierte Identifizierung eines Reifens mit Informationen über den Reifen gestatten. Diese Informationen, die beispielsweise Nennbreite, Verhältnis von Flankenhöhe zur Laufflächenbreite, Felgendurchmesser, Geschwindigkeitskategorie und zusätzliche Bezeichnungen wie beispielsweise die DOT-Nummer, die das Alter des Reifens angibt, umfassen, befinden sich auf der Seitenwand des Reifens. Zum Erfassen dieser Informationen auf den Reifenseitenwänden werden kamerabasierte Vorrichtungen genutzt, die die Informationen optisch erfassen und auswerten, um die Reifen zu sortieren und gegebenenfalls aussortieren zu können.

Bekannte Vorrichtungen nutzen hierzu eine oder mehrere Kamera(s), die Bilder der Reifenseitenwand aufnehmen, und eine Bildverarbeitungssoftware, die die aufgenommenen Bilder im Hinblick auf die interessierenden Informationen auswertet.

Bei einigen dieser Systeme ist die Kamera an einem Roboterarm befestigt und wird so lange über dem liegenden Reifen im Kreis geführt, bis die Kamera ein Bild der Seitenwand mit den gewünschten Informationen erfasst und zur Auswertung weiterleitet. Andere Systeme drehen den liegenden Reifen unter einer feststehenden Kamera durch.

DE 100 17 621 A1 offenbart ein Verfahren zum Identifizieren und Positionieren von Fahrzeugreifen, bei dem Kameras eingesetzt werden, an denen die Reifen liegend vorbeibewegt werden, wobei Informationen auf den Seitenflächen der Reifen erkannt werden. Die Kameras können oberhalb einer Transporteinrichtung für Reifen angebracht sein, an einer Stelle, an der die Reifen mittels einer Auffangeinrichtung angehalten und zentriert werden, oder, wenn die Reifen sich schnell bewegen, an einem beweglichen Roboterarm, dessen Bewegung mit der Reifenbewegung synchronisiert ist. Die mit den mehreren Kameras gewonnenen Teilbilder des Reifens werden zusammengesetzt und ausgewertet, ehe der Reifen zum Weitertransport freigegeben wird.

Aus DE 600 15 853 T2 ist eine Reifenhalterung bzw. Spannvorrichtung bekannt, mit der der Reifen in Rotation versetzt werden kann. Diese Vorrichtung umfasst einen bewegbaren Rahmen, an dessen Ende eine kreisförmige Platte und eine Greifvorrichtung aus mehreren Greifrollen angeordnet ist, die entlang Führungsschienen radial in Bezug auf einen Reifen bewegt werden können. Die Drehachse der Greifrollen ist senkrecht zu den Führungsschienen, sodass die Greifrollen in die Reifenöffnung eingeführt und dort radial nach außen zum Eingriff mit dem Reifen bewegt werden können. Zum Lesen von Reifeninformationen auf der Seitenwand eines erfassten Reifens ist eine Kamera oder dergleichen vorgesehen, die direkt oberhalb eines Fensters in der kreisförmigen Platte angeordnet ist und die Bilder von der Seitenwand erfasst, wenn der Reifen gedreht wird.

In DE 34 06 719 C2, die in erster Linie das Aufbringen eines Gleitmittels auf die Wülste des Reifens vorsieht, um ihn besser auf Felgen oder dergleichen von Reifenbearbeitungs- oder Reifenprüfmaschinen aufbringen und wieder abnehmen zu können, wird ferner das Ablesen von Kodierungen auf der Reifenseitenwand mittels eines Lesekopfes erwähnt, dessen Anordnung aber nicht näher beschrieben wird. Die dort offenbarte Vorrichtung zum Positionieren und Drehen von Reifen weist einen angetriebenen Förderer auf, auf dem die Reifen durch zwei verstellbare Anschläge zentriert werden. In diesem Bereich weist die Vorrichtung eine Stützeinrichtung auf, die auf versetzt angeordneten Stützrollen basiert, die parallel zu und zwischen benachbarten Förderrollen auf- und abwärtsbewegbar angeordnet sind und durch Anheben den Reifen einseitig kippen können. Um den Reifen in dieser gekippten Stellung zu drehen, weist diese Vorrichtung ein Rückhalteelement auf, das zentriert zwischen zwei Förderrollen angeordnet ist, und nach Anheben in eine Arbeitsstellung den einseitig gekippten Reifen zurückhält, wenn dieser nach Entfernen der Anschläge durch den Förderer weitergefördert würde. Da der Reifen dann nur noch einseitig auf dem Förderer aufliegt, wird er in Drehbewegung versetzt.

Solche Vorrichtungen zum Positionieren und Drehen von Reifen ermöglichen folglich nicht nur das Identifizieren der Reifen durch Ablesen der Informationen auf der Reifenseitenwand, sondern gestatten auch die Durchführung von Arbeitsschritten wie dem Aufbringen von Gleitmitteln, der Durchführung von Messungen etwa zur Überprüfung des Rundlaufs etc. oder auch wie dem Abschleifen der Reifenseitenwand zum Beispiel.

So beschreibt US 3,001,334 eine Vorrichtung zum Abschleifen von Reifenseitenwänden mit einem Rollenförderer zur Zuführung der Reifen, auf dem die Reifen durch Anschläge zentrisch zu einer oberen und unteren Felgenkranzanordnung ausgerichtet werden, die den Reifen erfassen und nach Anheben in Umdrehung versetzen.

Weiter offenbart DE 11 2014 000 967 T5 ein Reifentestsystem, bei dem die auf einem Förderband geförderten Reifen mit einer nicht näher beschriebenen Zentriervorrichtung zentriert werden, bevor sie zu einem Messabschnitt gefördert werden, der ein Paar in Förderrichtung voneinander distanzierte Förderbänder aufweist. Zwischen diesen Förderbändern ist eine untere Felgenkranzanordnung angeordnet, die drehbar angetrieben werden kann. Das Förderbandpaar wird abgesenkt, um einen aufliegenden Reifen mit dem unteren Felgenkranz in Kontakt zu bringen. Ein oberer Felgenkranz wird zum Kontaktieren des Reifens entsprechend abgesenkt und der Reifen wird zur Durchführung von Messungen in Drehung versetzt.

WO 2004 031717 offenbart eine Vorrichtung nach dem Oberbegriff des Anspruchs 1.

In CN 107 055 050 A wird ebenfalls eine Fördervorrichtung offenbart, die zum Wenden von Gegenständen, dort Zigarettenpackungen, ausgebildet ist.
Ausgehend von diesem Stand der Technik ist es zunächst Aufgabe der vorliegenden Erfindung, eine Vorrichtung zur Handhabung von Reifen bereitzustellen, mit der Reifen, die entlang einer Förderbahn in horizontaler Lage transportiert werden, zentriert aufgerichtet werden können, um die Handhabung der Reifen bei durchzuführenden Arbeitsschritten zu vereinfachen.
Diese Aufgabe wird durch eine Vorrichtung mit den Merkmalen des Anspruchs 1 gelöst. Weiterbildungen der Vorrichtung sind in den jeweiligen Unteransprüchen ausgeführt. Das Verfahren mit den Merkmalen des unabhängigen Anspruchs 14 schließlich löst die Aufgabe, Reifen geschickt an einen Ort zu fördern und sie dort handhaben zu können. Eine erste Ausführungsform der erfindungsgemäßen Vorrichtung zum Handhaben von Reifen bezieht sich auf eine Vorrichtung mit einer Reifenfördereinrichtung zum Fördern liegender Reifen von einer ersten zu einer zweiten Stelle - hieraus ergibt sich naturgemäß auch immer eine "Förderrichtung" für die Fördereinrichtung. "Liegend" bedeutet hier, dass der Reifen auf seiner Seitenwand liegt, wohingegen "stehend" eine aufrechte Lage des Reifens bezeichnet, in der die Lauffläche die Unterlage kontaktiert.

Erfindungsgemäß weist die Reifenfördereinrichtung drei Förderbahnen auf, die parallel, aber mit einem gewissen Abstand zueinander entlang der Länge der Fördereinrichtung angeordnet sind. Der Abstand wird hierin als "Gasse" bezeichnet, die sich entsprechend jeweils zwischen den beiden äußeren Förderbahnen und der mittleren Förderbahn auftut.

Weiter weist die Vorrichtung zwei ebenfalls parallel zueinander angeordnete Gabelelemente auf, die jeweils zwei Schenkel haben, die an einem Verbindungspunkt miteinander verbunden sind. Durch die Verbindungspunkte beider Gabelelemente verläuft eine gemeinsame Schwenkachse der Gabelelemente.

In jeder der Gassen ist jeweils eines der Gabelelemente um den Verbindungspunkt schwenkbar derart angeordnet, dass
- in einer ersten Position jeweils der zweite Schenkel jedes Gabelelements in der Förderbahnebene aufgenommen ist, sodass der erste Schenkel jedes Gabelelements aus der Förderbahnebene herausragt, und
- in einer zweiten Position beide Schenkel jedes Gabelelements sich aus der Förderbahnen-Ebene herauserstrecken, wobei die ersten Schenkel in Richtung der Förderbahnebene herabgeschwenkt und die zweiten Schenkel aus den Gassen herausgeschwenkt sind.

Mit anderen Worten: In der ersten Position liegt der eine Schenkel beider Gabelelemente so in der Gasse, dass er darin aufgenommen ist und nicht über die Oberfläche der Förderbänder hinausschaut, so dass er folglich einen Reifen, der sich auf den Förderbändern bewegt, nicht hemmt, während die anderen Schenkel einen Anschlag für einen angeförderten Reifen bilden.

Durch diese vorteilhafte Ausführungsform der erfindungsgemäßen Vorrichtung mit Förderbahnen und verschwenkbarer Anordnung der Gabelelemente können Gegenstände wie Reifen zunächst transportiert werden (erste Position), bis sie an dem durch die herausragenden Schenkel gebildeten Anschlag ankommen, und dann durch das Schwenken der Gabelelemente in die zweite Position aufgestellt werden. Die zuvor in der Förderbahnebene liegenden Reifen werden mit dem gleichzeitigen und vollkommen synchronen Verschwenken der Gabelelemente in die zweite Position durch die zuvor in den Gassen liegenden Schenkeln aus der Ebene in eine stehende oder annähernd stehende Lage überführt, in der sie auf den ersten Schenkeln aufliegen, die in der ersten Position den Anschlag bilden. Hierbei wird der Reifen durch die Auflage auf den nun in Richtung der Förderbahnebene verschwenkten bzw. vorzugsweise nun annähernd zu diesen parallel angeordneten Schenkeln, die zuvor den Anschlag gebildet haben, zentriert.

Damit können die Reifen zielgerichtet einer Bearbeitung unterzogen werden, für die geeigneter Weise bspw. die Seitenwand des zentriert aufgestellten Reifens in stehender Position ist.

Die Gabelelemente können sich am Ende der Förderstrecke befinden, so dass nach dem Aufstellen der Reifen diese bspw. an eine andere Fördereinrichtung übergeben werden oder auch in eine Lagervorrichtung gekippt oder manuell oder mittels Vorrichtung entnommen werden könnten.

Erfindungsgemäß ist die Vorrichtung derart weitergebildet, dass der zentriert aufgerichtete Reifen gedreht wird, wodurch die Durchführung verschiedener Maßnahmen am Reifen ermöglicht wird, wie beispielsweise Aufbringen von Gleitmittel, Abschleifen, Durchführung von Messungen oder Erfassung von Informationen auf der Seitenwand des Reifens zur Identifizierung desselben. Dazu hat zumindest der erste Schenkel jedes Gabelelements, auf der dem jeweils zugehörigen zweiten Schenkel zugewandten Seite eine Rolle, deren Drehachse parallel zu dem zugehörigen Schenkel verläuft. Eine Rolle eines "ersten Schenkels", der also den "Anschlag" bildet, ist dabei angetrieben; es können auch beide ersten Schenkel eine angetriebene Rolle haben, das ist aber an sich erlässlich. Die nicht angetriebenen Rollen sind unabhängig voneinander frei drehbar. Die Drehrichtung einer einzigen angetriebenen Rolle wird vorzugsweise so gewählt, dass der darauf abrollende Reifen in Richtung der nicht angetriebenen Rolle des anderen Gabelelements bewegt wird, d. h. ist - von vorne betrachtet - die linke Rolle angetrieben, so ist die Drehrichtung im Uhrzeigersinn und entsprechend umgekehrt für eine angetriebene Rolle rechts entgegen Uhrzeigersinn. Sind beide Rollen angetrieben, ist die Drehrichtung beliebig, da beide in gleicher Richtung rotieren müssen.

Es können auch an den zweiten Schenkeln frei drehbare Rollen vorliegen, um die Reibung an der Seitenwand des Reifens, der dort in der zweiten Position der Gabelelemente anliegt, zu verringern, wenn der Reifen zur Bearbeitung oder Inspektion gedreht werden soll. Um das reibungsarme Abrollen des Reifens an den Langschenkeln weiter zu verbessern, können dort in Längsrichtung jeweils zwei Rollen vorgesehen sein, die unabhängig voneinander frei drehbar sind, da sich die Richtungen, in denen sich der anliegende drehende Reifen auf seiner Seitenwand an seiner oberen und unteren Hälfte abrollt, unterscheiden.

Zur Bildung des Gabelelementes spannen in einer weiteren Ausführungsform der erfindungsgemäßen Vorrichtung der erste Schenkel und der zweite Schenkel jedes Gabelelementes einen Winkel im Bereich von 80° bis 100°, bevorzugt 90°, auf und der Verbindungspunkt wird durch eine Kante gebildet. Grundsätzlich könnten die beiden Schenkel auch Abschnitte eines einzigen, gebogenen Bauteils sein - dann läge der Verbindungspunkt im Radius.

Wenn in einer weiteren Ausführungsform der erfindungsgemäßen Vorrichtung das Gabelelement L-förmig ist, ist der erste Schenkel, der den Anschlag in der ersten Position bildet, ein Kurzschenkel und der zweite Schenkel ist ein Langschenkel. Die schwenkbare Anordnung der Gabelelemente in den Gassen ist dann derart, dass in der ersten Position die Langschenkel parallel zu der Förderrichtung in den Gassen liegen, also in oder unterhalb der durch die Förderbahnen definierten Förderebene. Die Kurzschenkel, die bezüglich der Förderrichtung förderabwärts an den Langschenkeln vorliegen, ragen entsprechend senkrecht zur Förderrichtung oder je nach der Gestaltung des Winkels, den die Schenkel aufspannen, aus den Gassen über die Förderebene heraus, sodass sie den Anschlag für einen Reifen bilden, der über die Förderbahnen in Förderrichtung angefördert wird. Mit der förderabwärtigen Lage der Kurzschenkel in Bezug auf die Langschenkel befinden sich demnach die in den Gassen befindlichen Langschenkel unter dem angeförderten Reifen beim Erreichen der als Anschläge wirkenden Kurzschenkel der Gabelelemente.

Der Schwenkwinkel der Gabelelemente, um den die Schenkel von der ersten in die zweite Position verschwenkt werden, kann in einem Bereich von 60° bis 90° liegen.

Bevorzugt beträgt dieser Schwenk- bzw. Aufstellwinkel unter 90°, besonders bevorzugt 85°, sodass der stehende Reifen nicht vornüber kippt und zur Stabilisierung seiner Lage an den (Lang-)Schenkeln anliegt, die in der ersten Position in den Gassen lagen.

Das gleichzeitige und vollkommen synchrone Verschwenken beider Gabelelemente um eine Achse, die quer zur Förderrichtung im Bereich der Verbindungspunkte verläuft, kann in einer weiteren Ausführungsform der erfindungsgemäßen Vorrichtung etwa dadurch erzielt werden, dass beide Gabelelemente miteinander verbunden sind und bspw. einen Gabelträger bilden. Sie können über einen Schwenkmechanismus, der eine Achse umfasst, an dem Rahmen befestigt werden, der auch die Förderbahnen und die zugehörige Antriebsmechanik und -elektronik trägt.

In einer noch weiteren Ausführungsform weisen alle vier Schenkel der beiden Gabelelemente Rollen auf.

Zum Verschwenken können die Gabelelemente ein gemeinsames Betätigungselement bzw. kann der Gabelträger ein Betätigungselement haben, also ein Bauteil, das das Verschwenken in Gang setzt. Das Bauteil kann dabei generell manuell, aber auch elektronisch bzw. automatisiert betätigt werden. Es kann ein Schwenkhebel sein.

In einer weiteren Ausführungsform der erfindungsgemäßen Vorrichtung kann der Schwenkhebel sich im Bereich des Verbindungspunkts auf der von den (Lang-)-Schenkeln abgewandten Seite wegerstrecken und bspw. gelenkig mit einer Hubstange verbunden sein, die verfahrbar in einem Hubzylinder geführt wird, der schwenkbar mit dem Rahmen der Reifenfördereinrichtung verbunden ist, sodass das Verschwenken durch Ein- und Ausfahren der Hubstange in den oder aus dem Hubzylinder erfolgt.

Die drei Förderbahnen müssen nicht zwangsläufig nur aus drei Förderbändern bestehen - es ist ohne weiteres denkbar, dass z. B. die mittlere Förderbahn aus zwei parallel angeordneten und betriebenen Förderbändern bestehen kann, etc. Wichtig dabei ist nur, dass zwei Gassen zwischen den Förderbahnen für die Gabelelemente ausgebildet sind.

Die drei Förderbahnen können dabei Rollenförderer oder Förderbänder sein, wobei modulare Förderbänder mit einer Vielzahl beweglich gelagerter Einzelkörper Vorteile haben, da hierdurch bereits mit der Förderung eine Vorzentrierung der liegenden Reifen erfolgt. Die Einzelkörper können dabei Kugeln oder vorzugsweise Zylinder bzw. Scheiben sein, deren Drehachse parallel zur Förderrichtung verläuft, sodass sich die Einzelkörper quer zur Förderrichtung drehen können. Hierdurch kann der auf den Förderbahnen geförderte Reifen eine Bewegung quer zur Förderrichtung ausführen, was bereits zu einer Vorzentrierung des Reifens führt, wenn dieser an den aus den Gassen herausragenden Schenkeln in der ersten Position der Gabelelemente anschlägt.

Mit der erfindungsgemäßen Vorrichtung können Reifen verschiedener Größen, vorzugsweise aber innerhalb eines definierten Größenbereichs, gehandhabt werden, ohne dass ein Umrüsten der Vorrichtung erforderlich ist, indem die Kurzschenkel eine Länge aufweisen, die größer gewählt ist als die größte Breite eines mit der Vorrichtung zu handhabenden Reifens. Die Langschenkel weisen eine Länge auf, die entsprechend oder ebenfalls größer gewählt ist als der größte Durchmesser eines mit der Vorrichtung zu handhabenden Reifens, um eine sichere Anlage zu gewähren, wenngleich der Reifen nicht an seinem größten Durchmesser an den Langschenkeln anliegt. Die Breite der Gassen kann an die Breite der Gabelelemente angepasst sein, um den Abstand zwischen den benachbarten Förderbahnen so klein wie möglich zu halten. Der Abstand zwischen den Gassen bzw. den Gabelelementen und entsprechend auch die Breite der mittleren Förderbahn ist kleiner gewählt als der kleinste Durchmesser eines mit der Vorrichtung zu handhabenden Reifens. Die mit der Vorrichtung zu handhabenden Reifen können beispielsweise PKW-Reifen mit Felgendurchmessern von 13" bis 25" mit Reifendurchmessern im Bereich von etwa 500 bis 850 mm sein. Ein dafür geeigneter Abstand zwischen den Gabelelementen bzw. den Gassen liegt in einem Bereich von 350 bis 450 mm. Für Reifen mit größeren Abmessungen, wie z. B. LKW- oder Traktor-Reifen, kann eine erfindungsgemäße Vorrichtung entsprechend angepasste größere Dimensionen aufweisen.

Allerdings ist es auch denkbar, dass in einer alternativen erfindungsgemäßen Ausführungsform der Abstand zwischen den Gassen (durch quer zur Förderrichtung positionierbare Förderbahnen) und der Abstand zwischen den Gabelelementen (z. B. durch entsprechende Hubeinrichtungen) variierbar bzw. verstellbar ist, so dass die Vorrichtung für Reifen aller Größenbereiche nutzbar ist.

Bei der erfindungsgemäßen Vorrichtung, mit der Reifen, die liegend gefördert werden, aufgestellt und in der aufgestellten Lage gehandhabt werden können, und dabei vorzugsweise gedreht werden können, kann vorgesehen sein, dass diese Vorrichtung am Ende einer Förderstraße steht, sodass die auf den herausgeschwenkten Gabelelementen aufgestellten Reifen entweder händisch oder mit einer automatisierten Greifvorrichtung, beispielsweise einem Schlepphaken oder einem Roboterarm, entnommen werden, woraufhin die Gabelelemente zurückverschwenkt werden in die erste Position und ein nächster Reifen angefördert werden kann. Zur Stabilisierung der Gabelelemente in der herausgeschwenkten, zweiten Position können förderabwärts der Schwenkachse in den Gassen Anschläge, vorzugsweise gepufferte Anschläge für die ersten Schenkel vorgesehen sein.

Um die Reifen nach der Handhabung auf einem Förderband, bspw. zu einer automatischen Sortierungsanlage, weiterfördern zu können, kann in einer weiteren Ausführungsform der erfindungsgemäßen Vorrichtung, die auf einen Anschlag für die ersten Schenkel in den Gassen verzichtet, vorgesehen sein, dass die Gabelelemente durch Weiterverschwenken in einer dritten Position anordenbar sind, in der die Langschenkel um einen Winkel größer als 90° aus den Gassen herausgeschwenkt und die Kurzschenkel entsprechend in Richtung der Gassen herabgeschwenkt sind, sodass der Reifen von den Gabelelementen umgekippt wird, z. B. auf eine weiterführende Förderbahn. Alternativ zum Weiterverschwenken oder zusätzlich dazu kann vorgesehen sein, dass die Gabelelemente bzw. der Gabelträger nicht nur verschwenkbar sondern auch in einer vertikalen Richtung verfahrbar ausgeführt sein kann, sodass die Kurzschenkel in der zweiten Position unter die Förderebene bewegt werden können, sodass ein auf den Kurzschenkeln aufliegender Reifen von den Förderbahnen oder einer anderen Fördereinrichtung aufgenommen und weitertransportiert werden kann. Eine vertikale Richtung soll hier nicht nur ausschließlich eine Bewegung senkrecht zur Förderebene oder -richtung meinen, vielmehr sollen zur Förderrichtung gewinkelte Auf- und Abwärtsrichtungen umfasst sein, die eine Anordnung der Kurzschenkel ober- und unterhalb der Förderebene ermöglichen.

Eine weitere, bevorzugt vorgeschlagene Ausführungsform einer erfindungsgemäßen Vorrichtung schlägt als Handhaben das Identifizieren von Reifen vor und weist dazu eine Digitalkamera und eine damit verbundene (also in Daten übertragender Beziehung stehende) Bildverarbeitungseinrichtung auf. Dabei ist die Kamera so angeordnet und ausgerichtet, dass sie einen Abschnitt der Seitenwand eines vorbestimmten Reifens erfasst, der stehend auf den Gabelelementen angeordnet ist, die in der zweiten Position angeordnet sind.

Wenn das mit der Kamera fokussierbare Aufnahmefeld in einem unteren Bereich des Reifens zwischen den Gabelelementen liegt, ist dies besonders geeignet für die Identifikation von Informationen auf der Reifenseitenwand, da sich die Lage dieses Reifenbereichs zwischen dem Gabelelement bei unterschiedlichen zu handhabenden Reifengrößen nur geringfügig unterscheidet, sodass die Ausrichtung der Kamera durch die Wahl des Aufnahmefelds auf dem zwischen den Gabelelementen liegenden unteren Seitenwandabschnitt für die unterschiedlichen Reifengrößen (innerhalb eines mit der Vorrichtung zu handhabenden Reifengrößenbereichs, z. B. PKW-Reifen) gleich bleibt. Die Kamera kann daher fest installiert werden und sie kann, bspw. auch über einen Arm, auch an dem Rahmen der Vorrichtung befestigt werden. Generell kann sie, wenn auch zur Vorrichtung gehörig, auch unabhängig vom Rahmen der Fördereinrichtung befestigt werden. Durch das Drehen des Reifens in der aufgerichteten Lage auf den Gabelelementen wird die Seitenwand durch das vergleichsweise kleine Aufnahmefeld geführt, sodass quasi nur ein Streifen auf der Seitenwand, und nicht mehr der ganze Reifen komplett als Gesamtbild erfasst wird. Hierdurch wird der auszuwertende Bildausschnitt - und damit die zu verarbeitende Datenmenge - vorteilhaft klein gehalten, wodurch die Auswertung deutlich vereinfacht wird.

Die feste Installation der Kamera kann dennoch erlauben, dass die Kamera um eine horizontale Achse schwenkbar angeordnet sein kann, sodass die Lage des Aufnahmefelds in vertikaler Richtung zur Einstellung der optimalen Ausrichtung verschiebbar ist.

Außerdem muss betont werden, dass, wenn zu anderen Zwecken als zur Identifikation - bspw. zur optischen Profilvermessung - es geeignet erscheint, das Aufnahmefeld auch für eine andere Stelle des Reifens festzulegen, die Kamera an der anderen Stelle angeordnet wird.

Auch bei einer Vorrichtung, die die Handhabung von Reifen aus unterschiedlichen Größenbereichen vorsieht, bei der der Abstand der Gassen und der Gabelelemente durch einstellbare Förderbahnen und Gabelelemente an unterschiedliche Reifengrößen anpassbar ist, kann die Anordnung und Ausrichtung der Kamera mit dem Aufnahmefeld zwischen den Gabeln im Wesentlichen vorteilhaft unverändert bleiben, da die Lage des Abschnitts der Reifenseitenwand zwischen den Gabelelementen durch die Variation des Abstands der Gabelelemente in etwa gleich bleibt.

Bezüglich der Anordnung der Kamera ist in einer Ausführungsform des erfindungsgemäßen Systems vorgesehen, dass die zumindest eine Kamera oberhalb der mittleren Förderbahn, vorzugsweise mittig oberhalb der mittleren Förderbahn, förderabwärts oder förderaufwärts zu den Gabelelementen, d. h. in Förderrichtung nach oder vor den Gabelelementen, angeordnet ist. In einfacher Weise kann die Kamera an einem Bügel oder Arm, der sich quer über die Förderbahnen und außerhalb des Schwenkbereichs der Gabelelemente erstreckt, befestigt werden. Vorzugsweise kann das System zwei Kameras aufweisen, wobei die erste Kamera förderabwärts zu den Gabelelementen und die zweite Kamera förderaufwärts zu den Gabelelementen angeordnet ist, um wahlweise Vorder- oder Rückseite des aufgestellten Reifens erfassen zu können, je nach dem auf welcher Seite sich die zur Identifizierung gewünschten/benötigten Informationen befinden.

Die Vorrichtung kann ferner eine Steuerungseinrichtung aufweisen, die mit der Betätigungsvorrichtung und/oder mit dem Antrieb der Förderbahnen operativ, also zur Durchführung einer Aktion, verbunden ist. Hier, um das Verschwenken der Gabelelemente in die zweite Position anzusteuern und/oder um den Antrieb der Förderbahnen anzusteuern. Die Steuerungseinrichtung kann ferner ein Zeitsteuerungs- und/oder Synchronisierungsmodul aufweisen.

Die Steuerungseinrichtung kann darüber hinaus mit der Kamera oder den Kameras und/oder mit einem Antrieb der drehbar angetriebenen Rolle an dem Gabelelement operativ verbunden sein. Im Grunde ist dabei eine bidirektionale Funktionalität denkbar: Die Kamera kann erfassen, dass ein Reifen in aufgestellter Position vorliegt, die hierzu aufgenommenen Bilddaten veranlassen die Steuerung, den Antrieb der angetriebenen Rolle zu betätigen. Über eine entsprechende Zeitsteuerung bei bekanntem Reifenumfang kann dann der Antrieb und/oder die Bildaufnahme beendet werden, d. h. es ist auch möglich, dass bei bekanntem Reifenumfang die Aufnahmezeit der Kamera angesteuert wird und ebenfalls über Zeitsteuerung beendet wird.

Alternativ oder zusätzlich kann die Steuerungseinrichtung ein Synchronisierungsmodul aufweisen, mit dem eine mit der Umdrehung synchronisierte Bilderfassung durch die Kamera steuerbar ist. Zudem kann eine Ansteuerung des Antriebs der Rolle durch die Steuerungseinrichtung in Abhängigkeit der durch die Kamera erfassten und ausgewerteten Bildinformationen erfolgen. Beispielsweise kann das Anhalten der Rolle durch Ansteuerung des Antriebs gestoppt werden, wenn durch die Auswertung der Bilderfassung festgestellt wird, dass entweder der Reifen eine vollständige Umdrehung durchgeführt hat (wenn das "Anfangsbild" wieder erfasst wird) oder eine gewünschte Information auf der Seitenwand erfasst wurde. Im letzteren Fall muss dabei noch keine vollständige Umdrehung des Reifens erfolgt sein. Ferner kann vorgesehen sein, dass der Antrieb durch das Synchronisierungsmodul solange angesteuert wird, bis eine bereits erfasste, vorbestimmte Information auf der Seitenwand des Reifens in einer vorbestimmten Lage zu liegen kommt.

In einer weiteren Ausführungsform kann die erfindungsgemäße Vorrichtung eine Sensorvorrichtung aufweisen, etwa eine Lichtschranke, die förderaufwärts im Bereich des ersten Schenkels in der ersten Position angeordnet und mit der Steuerungseinrichtung verbunden ist. Die Lichtschranke ist dabei zur Erfassung eines auf den Förderbahnen angeförderten Reifens förderaufwärts der Schenkel, die in der ersten Position aus den Gassen über die Förderbahnen hinausragen, angeordnet.

Generell kann die Lichtschranke oder andere Sensorvorrichtung aber auch über den Förderbändern bzw. Gassen positioniert sein, oder darunter, und dann zwischen den Gassen hindurch die Erfassung eines Reifens ausführen.

Auch diese Lichtschranke oder andere Sensorvorrichtung kann mit der Steuerungseinrichtung verbunden sein. Über die Koppelung der Steuerungseinrichtung mit der Lichtschranke oder einer anderen Sensorvorrichtung kann in einer weiteren Ausführungsform das Tätigwerden der Betätigungsvorrichtung ausgelöst werden.

Am Beispiel der Ausführungsform mit der Hubeinrichtung aus Hubzylinder und Hubstange kann die Steuerungseinrichtung die Hubeinrichtung zum Verschwenken der Gabelelemente in die zweite Position ansteuern, indem die Hubstange in den Hubzylinder eingefahren wird.

Zusätzlich oder alternativ kann die Steuerungseinrichtung mit einem Antrieb der Förderbahnen verbunden sein, um den Antrieb zum Anhalten der Förderbahnen beim Erfassen eines angeförderten Reifens durch die Lichtschranke oder andere Sensorvorrichtung anzusteuern.

Mit dem automatischen Verschwenken bei Erfassen eines angeförderten Reifens kann auch das Drehen des Reifens mit dem Antrieb der Rollvorrichtung und die Bilderfassung mit der Kamera automatisch ausgelöst werden. Nach Beendigung der Bilderfassung mit der gewünschten Information des Reifens, und wenn der Reifen von den Gabelelementen entfernt wurde, werden die Gabelelemente zurück verschwenkt in die erste Position und ggf. die Förderbahnen wieder gestartet, um einen nächsten Reifen anzufordern. Das Rückschwenken und ggf. Wiederanlaufen der Förderbahnen kann durch Benutzereingabe veranlasst oder automatisch gesteuert werden, indem bspw. eine erfolgte Entnahme oder Weitergabe des Reifens elektronisch, beispielsweise mit einer Kamera oder einer anderen Sensorvorrichtung, erfasst und an die Steuerungseinrichtung übermittelt wird.

Ein erfindungsgemäßes Verfahren zum Handhaben von Reifen unter Verwendung einer erfindungsgemäßen Vorrichtung umfasst die Schritte:
- Anordnen der Gabelelemente in der ersten Position,
- Positionieren eines Reifens auf den drei parallel zueinander angeordneten Förderbahnen und Fördern des Reifens bis zu den aus den Gassen herausragenden ersten Schenkeln,
- Verschwenken der Gabelelemente in die zweite Position, dabei
- Mitschwenken des Reifens, bis er sich in der zweiten Position der Gabelelemente auf den ersten Schenkeln abstützt, dabei zentriert wird und an den zweiten Schenkeln anliegt, dann
- Ausführen einer Handhabungs-Tätigkeit an dem Reifen, und
- Abfördern des Reifens.

Wenn das Verfahren zum Handhaben von Reifen der erfindungsgemäßen Vorrichtung als Handhabungs-Tätigkeit das Identifizieren von Reifen umfasst, braucht es weiter die Schritte: Nach dem Mitschwenken des Reifens, bis er sich in der zweiten Position der Gabelelemente auf den ersten Schenkeln abstützt, dabei zentriert wird und an den zweiten Schenkeln anliegt,
- Fokussieren eines Aufnahmefelds auf einem Abschnitt der Seitenwand, der in einem unteren Bereich des Reifens zwischen den Gabelelemente vorliegt, mit der zumindest einen Kamera, die auf den Seitenwandabschnitt des Reifens ausgerichtet ist, und
- Antreiben der zumindest einen an dem Kurzschenkel angeordneten, drehbar angetriebenen Rolle und Drehen des Reifens, dabei
- Erfassen von Bilddaten der Seitenwand des sich drehenden Reifens innerhalb des Aufnahmefelds an dem Seitenwandabschnitt mit der zumindest einen Kamera und Auswerten der Bilddaten, die Informationen zur Identifizierung des Reifens umfassen.

Mit Verwendung des erfindungsgemäßen Systems kann das Verfahren auch alle Steuerungsschritte umfassen, die mit der Steuerungseinrichtung verbunden sind wie im Zusammenhang mit der Vorrichtung ausgeführt.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Seitenansicht einer Vorrichtung zur Handhabung und Identifizierung von Reifen mit den Gabelelementen in der ersten Position,
- **Fig. 2**: eine Draufsicht auf die Vorrichtung aus Fig. 1,
- **Fig. 3**: eine Seitenansicht der Vorrichtung aus Fig. 1 mit den Gabelelementen in der zweiten Position,
- **Fig. 4**: eine Frontansicht der Vorrichtung aus Fig. 3,
- **Fig. 5**: eine perspektivische Ansicht der Vorrichtung zur Handhabung von Reifen mit den Gabelelementen in der ersten Position,
- **Fig. 6**: eine perspektivische Detailansicht der Vorrichtung, ausgebildet zur Identifizierung von Reifen mit den Gabelelementen in der zweiten Position,
- **Fig. 7**: ein Schema der mit der Steuerungseinrichtung verbundenen Komponenten,
- **Fig. 8**: eine schematische Darstellung der Seitenwand eines Reifens, und
- **Fig. 9**: ein Verfahrensfließbild.

Eine erfindungsgemäße Vorrichtung ist dazu vorgesehen, einen liegend auf einer Fördereinrichtung transportierten Reifen zentriert aufzurichten um daran eine Tätigkeit vorzunehmen.

Diese Tätigkeit kann bspw. das Identifizieren vom Reifen sein. Dazu ist es nötig, die Reifen zu drehen, die dann in Bezug auf die Fördereinrichtung zentriert aufgerichtet sind.

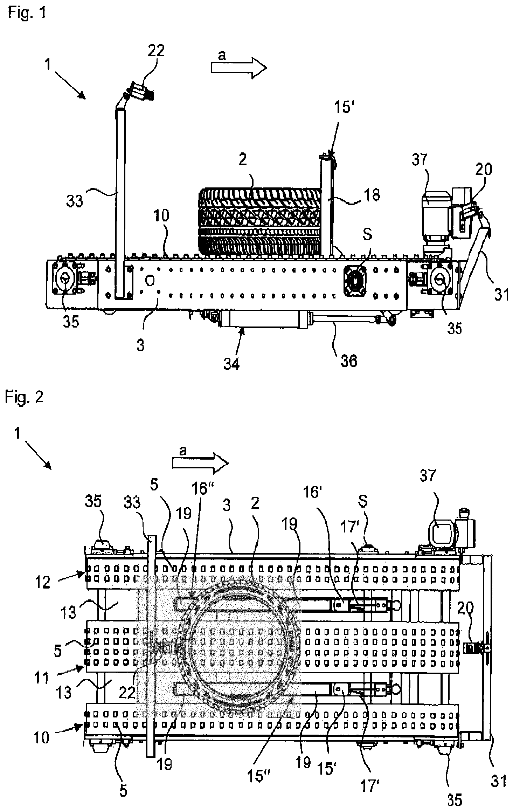

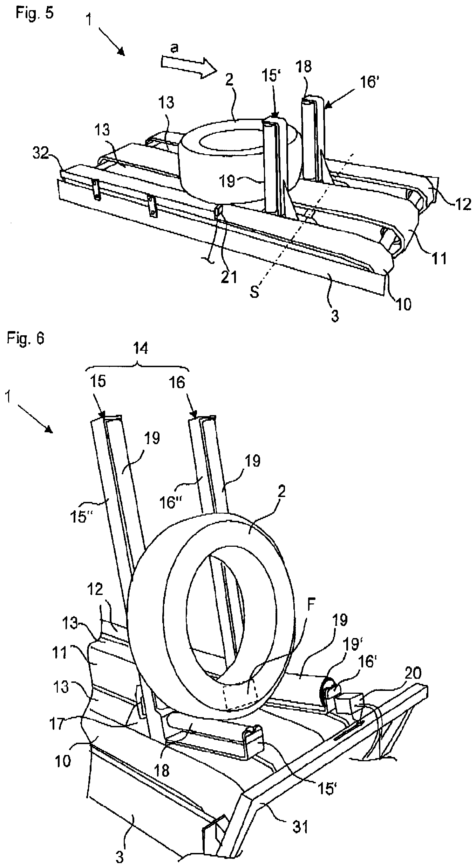

Die erfindungsgemäße Vorrichtung, die dieses ermöglicht, ist in **Fig. 1 bis 4** gezeigt. Das reine Handhaben mit zentriertem Aufstellen und Drehen eines Reifens 2 wird bereits durch **Fig. 5 und 6** gezeigt, in denen die Vorrichtung 1 ohne Kamera gezeigt ist.

Die in den **Figuren 1 bis 4** dargestellte Vorrichtung 1 umfasst eine Reifenfördereinrichtung zum Fördern von liegenden Reifen 2 in einer bestimmten Förderrichtung a. Die Reifenfördereinrichtung der Vorrichtung 1 kann einen Abschnitt einer größeren Reifenförderanlage zu Beginn, innerhalb oder am Ende einer Gesamtreifenförderstrecke bilden.

Die Reifenfördereinrichtung der erfindungsgemäßen Vorrichtung 1 besteht aus drei parallel zueinander angeordneten Förderbahnen 10,11,12, jeweils aus einem umlaufenden Förderband, das an endständigen Umlenkwellen 35, die in einem Rahmen 3 befestigt und gelagert sind, umgelenkt und angetrieben wird. Die Förderbahnen 10,11,12, auf denen der Reifen 2, wie in **Fig. 1, 2** **und** **4** zu sehen ist, liegend in Förderrichtung a transportiert wird, sind unter Bildung einer Gasse 13 jeweils zwischen einer äußeren Förderbahn 10,12 und der mittleren Förderbahn 11 quer zur Förderrichtung a voneinander beabstandet.

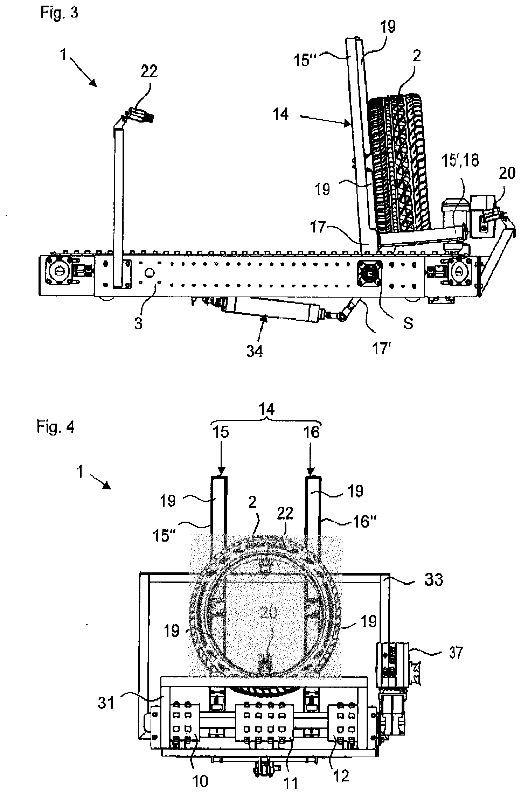

Um den Reifen 2 aufzustellen, weist die Vorrichtung 1 zwei parallele Gabelelemente 15,16 auf, die in der gezeigten Ausführungsform der **Fig. 3** **und** **6** eine L-Form mit jeweils einem Kurzschenkel 15',16' und einem Langschenkel 15",16" aufweisen und die um eine Schwenkachse S schwenkbar sind. Generell können die Schenkel - figurativ nicht gezeigt - auch gleich lang sein. Die Schwenkachse S erstreckt sich quer bzw. rechtwinklig zur Förderrichtung a im Bereich einer Kante 17, über die der Kurzschenkel 15',16' und Langschenkel 15",16" des L miteinander verbunden sind. Die beiden Gabelelemente 15, 16 sind in den beiden Gassen 13 angeordnet, sodass die Langschenkel 15",16" in einer ersten Position der Gabelelemente 15,16, die in **Fig. 1, 2** **und** **5** gezeigt ist, parallel zu der Förderrichtung a in den Gassen 13 - unterhalb einer durch die Förderbahnen 10,11,12 definierten Förderebene - liegen. Aufgrund der L-Form ragen dabei die Kurzschenkel 15',16' senkrecht zur Förderrichtung a aus den Gassen 13 heraus und bilden dadurch einen Anschlag für einen angeförderten Reifen 2. Die Anordnung der Gabelelemente 15,16 ist dabei so gewählt, dass die Kurzschenkel 15',16' bezüglich der Förderrichtung a förderabwärts an den Langschenkeln 15",16" vorliegen, die damit in der ersten Position unterhalb des angeförderten Reifens 2 angeordnet sind, der an den Kurzschenkeln 15',16' ankommt.

Durch synchrones Verschwenken der Gabelelemente 15,16 um die Schwenkachse S in eine zweite Position (siehe **Fig. 2****,** **3** **und** **6**) werden die Schenkel - hier Langschenkel 15",16" - um einen Winkel zwischen 60° und 90°, vorzugsweise 85°, aus den Gassen 13 herausgeschwenkt und die Schenkel (Kurzschenkel) 15',16' entsprechend in Richtung der Horizontalen herabgeschwenkt, so dass sie entsprechend einen Winkel von 30° bis 0°, vorzugsweise 5° zur Horizontalen bzw. zur Förderebene aufweisen. Der Reifen 2, der in der ersten Position liegend an den Kurzschenkeln 15',16' anliegt, wird durch Auflage auf den Langschenkeln 15",16" in die zweite Position mitverschwenkt, in der der Reifen 2 nahezu aufrecht auf den Kurzschenkeln 15',16' aufliegt und an den Langschenkeln 15",16" zur Stabilisierung der aufrechten Lage anliegt. Durch die Auflage auf den Kurzschenkeln 15',16' wird der Reifen 2 zentriert. Diese Situation wird auch in **Fig. 5 und 6** deutlich, die nicht die Details des Rahmens, der Antriebe etc. zeigen.

Die Gabelelemente 15,16 bewegen sich in den figurativ gezeigten Ausführungsformen ohne Weiteres bereits deswegen synchron, da sie miteinander mechanisch verbunden sind und einen Gabelträger 14 bilden, bei dem die beiden Gabelelemente 15,16 im Bereich der Verbindungspunkte 17, z. B. durch die Schwenkachse S miteinander gekoppelt und entsprechend dem Abstand zwischen den Gassen 13 voneinander beabstandet sind.

Zum Drehen der aufgestellten Reifen hat jedes Gabelelement 15,16, siehe **insb.** **Fig. 6****,** an dem Kurzschenkel 15',16' auf der dem jeweiligen Langschenkel 15",16" zugewandten, benachbarten Seite, auf der in der zweiten Position der Reifen 2 aufliegt, eine Rolle 18,19 mit einer zu den Kurzschenkeln 15',16' parallelen Drehachse. In **Fig.** 6 hat die Rolle 19 des Gabelelements 16 eine rutschhemmende Beschichtung 19', z. B. eine Gummierung, während die Rolle 18 motorisch angetrieben ist, um den Reifen 2 in Drehung zu versetzen. Die Beschichtung 19' verhindert ein Abrutschen des Reifens 2, der durch die im Uhrzeigersinn angetriebene Rolle 18 gegen die beschichtete Rolle 19 bewegt wird, die an dem Kurzschenkel 16' frei drehbar gelagert ist.

Alternativ zur dargestellten Ausführung kann auch diese Rolle 19 am Kurzschenkel 16' des Gabelelements 16 angetrieben sein, wobei beide Rollen mit Beschichtung vorliegen können.

Eine erfindungsgemäße Vorrichtung kann auch Rollen ohne rutschhemmende Beschichtung aufweisen.

Auch die Langschenkel 15",16" weisen in den dargestellten Beispielen in **Fig. 5 und 6** auf der jeweils zum zugehörigen Kurzschenkel 15',16' weisenden Seite, an der der aufgestellte Reifen 2 anliegt, frei drehbar gelagerte Rollvorrichtungen 19 mit zum jeweiligen Langschenkel 15",16" parallelen Drehachsen auf, um das Drehen des dort anliegenden Reifens 2 zu unterstützen und Reibung an der Seitenwand des Reifens 2 zu vermindern. Wie in **Fig. 2 bis 4** zu sehen ist, können an jedem Langschenkel 15",16" in Längsrichtung jeweils zwei Rollvorrichtungen 19 vorliegen, die entsprechend der Drehrichtung an der Anlagestelle des Reifens 2 in unterschiedlichen Richtungen abrollen können, wodurch die Verminderung der Reibung an der Seitenwand des Reifens 2 verbessert wird.

Wie in **Fig. 2** **und** **3** zu erkennen ist, weisen die Gabelelemente 15,16 einen Schwenkhebel 17' als Betätigungselement auf, der sich im Bereich der Verbindungspunkte 17 auf der von den Langschenkeln 15",16" abgewandten Seite wegerstreckt. An dem Schwenkhebel 17' ist eine Hubstange 36 angelenkt, die zur Anordnung der Gabelelemente 15,16 in der ersten Position aus einem Hubzylinder 34 ausgefahren ist (vgl. **Fig. 1**), der seinerseits schwenkbar mit dem Rahmen 3 verbunden ist. Durch Einfahren der Hubstange 36 in den Hubzylinder 34 und das damit verbundene Auslenken des Hubzylinders 34, was in **Fig. 3** zu sehen ist, werden die Gabelelemente 15,16 in die zweite Position überführt.

Diese Betätigungsanordnung kann grundsätzlich auch anders ausgeführt werden, so lange auf geeignete Weise das Überführen der Gabelelemente von der ersten in die zweite Position, bevorzugt gesteuert und automatisiert, möglich ist.

Die Förderbahnen 10,11,12 der in **Fig. 1 bis 4** gezeigten beispielhaften Ausführungsformen sind Förderbänder 10,11,12 mit einer Vielzahl drehbeweglich gelagerter Einzelkörper 5, die hier Zylinder sind. Deren Drehachse verläuft parallel zur Förderrichtung a, sodass die Einzelkörper 5 eine Bewegung des Reifens 2 quer zur Förderrichtung a zulassen, die zu einer Vorzentrierung des Reifens 2 in Bezug auf die Längsachse der Fördereinrichtung führt, wenn der Reifen 2 an den herausragenden Kurzschenkeln 15',16' anliegt.

Selbstverständlich kommen auch andere rotationsfähige Einzelkörper wie beispielsweise Kugeln in Frage. Anstelle eines solchen modularen Förderbands mit Einzelkörpern können auch herkömmliche Förderbänder oder Rollenförderer in der längsdreigeteilten Anordnung in einer erfindungsgemäßen Vorrichtung eingesetzt werden, wenngleich diese nicht die vorteilhafte Vorzentrierung durch die Einzelkörper bieten. Eine Zentrierung des Reifens 2 erfolgt dann nur durch den Anschlag an den herausragenden Kurzschenkeln und die Auflage auf den heruntergeschwenkten Kurzschenkeln.

Zur geeigneten Dimensionierung der Vorrichtung 1 zur Handhabung von unterschiedlichen Reifen 2 aus einer bestimmten Größenklasse, z. B. PKW-Reifen mit Felgendurchmessern von 13" bis 25", werden die Schenkel 15',16' und die jeweilige Rollvorrichtung 18,19 mit einer Länge ausgebildet, die größer gewählt ist als die größte Breite eines Reifens 2 aus der bestimmten Größenklasse. Bei PKW-Reifen kann eine maximale Reifenbreite bei bis zu 400 mm liegen, sodass die Länge der Kurzschenkel 15',16' und die jeweilige Rollvorrichtung 18,19 beispielsweise zu 500 mm gewählt werden kann, um eine stabile Auflage auch eines Reifens 2 mit größter Breite sicherzustellen. Entsprechend kann die Länge der anderen Schenkel 15",16" und deren Rollvorrichtungen 18 gewählt werden (im Falle von zwei Rollvorrichtungen 18 längs an einem Langschenkel, beträgt deren Länge in etwa jeweils die Hälfte). Da ein größter Reifendurchmesser bei PKW-Reifen bei etwa 850 bis 900 mm liegt, kann die Länge der Langschenkel 15",16" in diesem Bereich oder größer gewählt werden. In Abhängigkeit der Größe des Abstands zwischen den Gabelelementen 15,16 ist es aber im Prinzip auch denkbar, dass die Langschenkel 15",16" etwas kürzer als der maximale Reifendurchmesser dimensioniert werden, da die Höhe des aufgestellten Reifens 2, sozusagen die Sekante bzw. Kreissehne an der Stelle, an der der Reifen an dem Langschenkel anliegt, kleiner ist als der maximale Durchmesser des Reifens, der in der Mitte zwischen den Gabelelementen 15,16 liegt.

Wie vor allem in **Fig. 2** **und** **4** zu erkennen ist, ist zudem die Breite der Gassen 13 an die Gabelelemente 15,16 derart angepasst, dass diese reibungsfrei aus den Gassen herausschwenken können, ohne die Förderbahnen 10,11,12 zu berühren. Daher sind die Gassen 13 etwas breiter als die Breite der Gabelelemente 15,16. Der Abstand zwischen den Gassen 13 und damit der Abstand zwischen den Gabelelementen 15,16 und folglich auch die Breite der mittleren Förderbahn 11 wird bestimmt durch den kleinsten Durchmesser eines mit der Vorrichtung 1 zu handhabenden Reifens 2. Der Abstand der Gabelelemente 15,16 wird so gewählt, dass auch Reifen 2 mit dem kleinsten Durchmesser der bestimmten Reifenklasse mit den Gabelelementen 15,16 zentriert aufgestellt werden können. Im Falle der PKW-Reifen liegt ein kleinster Durchmesser bei etwa 500 mm, sodass ein Abstand zwischen den Gabelelementen 15,16 bei etwa 400 mm gewählt werden kann. Alternativ hierzu ist allerdings auch eine aufwändigere Variante denkbar, in der der Abstand zwischen den Gabelelementen 15,16 und entsprechend der Abstand zwischen den Gassen 13 mittels einer Verstellvorrichtung (nicht dargestellt) variabel einstellbar ist, um die Vorrichtung 1 an verschiedene Reifengrößen(klassen) anpassen zu können.

Ebenfalls nicht in den Figuren dargestellt ist eine Ausführungsform der Vorrichtung 1, in der die Gabelelemente 15,16 nicht nur zwischen der ersten und zweiten Position verschwenkbar sind, sondern weiter in einer dritten Position anordenbar sind, in der die Langschenkel um einen Winkel größer als 90° aus den Gassen herausgeschwenkt und die Kurzschenkel entsprechend in Richtung der Gassen herabgeschwenkt sind, sodass ein darauf angeordneter Reifen umgekippt wird und so liegend weiter gefördert werden kann. Alternativ oder zusätzlich können, um den Reifen weiterfördern zu können, die Gabelelemente abwärts verfahren werden, bis die Kurzschenkel unter der durch die Förderbahnen 10,11,12 oder durch andere, sich anschließende Förderbänder definierten Förderebene liegen, sodass der Reifen dort abgesetzt wird.

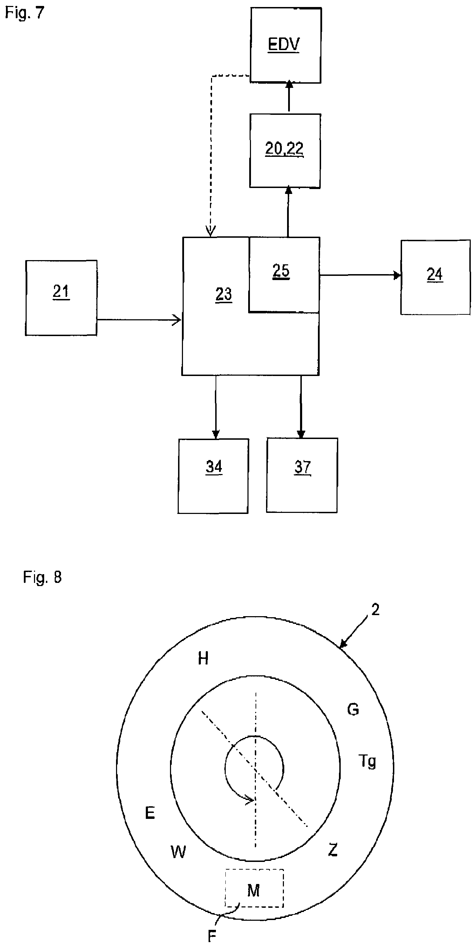

Wird die erfindungsgemäße Vorrichtung 1 mit einer Kamera 20, die in dem mit **Fig. 6** gezeigten Beispiel förderabwärts der Gabelelemente 15,16 angeordnet ist, oder zwei Kameras 20,22, die in dem mit **Fig. 1 bis 4** gezeigten Beispiel förderaufwärts und -abwärts der Gabelelemente 15,16 angeordnet sind, oder mehr Kameras (nicht dargestellt) ausgestattet, so dient die Vorrichtung dem Identifizieren der Reifen 2 anhand von Informationen, die auf der Seitenwand jeden Reifens 2 zu finden sind, was in **Fig. 8** symbolisiert dargestellt ist. Die Informationen, die auf der Seitenwand eines Reifens verteilt sind, umfassen üblicherweise Angaben über Hersteller H, Reifengröße G, Traglast und Geschwindigkeitsindex Tg, die DOT-Nummer Z (Herstellungszeit in vierstelliger Zahlenkombination für Kalenderwoche und Jahr), Modellbezeichnung M, Genehmigungskennzeichen E und ggf. Winterreifenkennung W. Ferner weisen Reifen an einer Seitenwand oder beiden Seitenwänden einen Markierungspunkt auf, mit dem der Hersteller die leichteste Stelle des Reifens markiert. Auch dieser Markierungspunkt kann eine der gewünschten Informationen sein. Um diese Informationen aus den Bilddaten auszuwerten, die mit den Kameras 20,22 des Systems, das durch die mit Kameras 20,22 ausgestattete Vorrichtung gebildet wird, erhalten werden, weist die Vorrichtung 1 eine Bildverarbeitungseinrichtung (nicht separat dargestellt) auf, die mit den Kameras 20,22 verbunden oder darin integriert ist.

Anders als bei herkömmlichen kamerabasierten Identifizierungssystemen können bei Verwendung der erfindungsgemäßen Vorrichtung 1 die Kameras 20,22 so platziert werden, dass die Seitenwand eines mittels der Gabelelemente 15,16 in der zweiten Position aufgerichteten Reifens 2 erfasst wird. Da ferner der aufgerichtete Reifen 2 durch die motorisch angetriebene Rolle 18 an dem Kurzschenkel 15' in Drehung versetzt werden kann, ist es vorteilhaft möglich, die Kameras 20,22 so anzuordnen und auszurichten, dass mit der Kamera 20,22 ein relativ kleines Aufnahmefeld F fokussiert werden kann, das lediglich einen Abschnitt der Seitenwand des Reifens 2 abdeckt, wie in **Fig. 6** **u. 8** dargestellt ist. Somit kann die auszuwertende Datenmenge deutlich kleiner gehalten werden als bislang, verbunden mit einer schnelleren und weniger aufwändigen Auswertung der Daten.

Die Kameras 20,22 sind in dieser figurativ gezeigten Ausführungsform so angeordnet und ausgerichtet, dass der innerhalb des Aufnahmefelds F erfassbare Seitenwandabschnitt des zentriert aufgerichteten Reifens 2 in einem unteren Bereich des Reifens 2 mittig zwischen den Gabelelementen 15,16 vorliegt, da an dieser Stelle für unterschiedlich große Reifen 2 nur sehr geringe Lageunterschiede auftreten. Die Kameras 20,22 werden entsprechend mittig an einem Haltebügel 31,33 oberhalb der mittleren Förderbahn 11 so angeordnet, dass sie außerhalb der Schwenkradien der Gabelelemente 15,16 liegen.

Generell können die Kameras auch den Fokus z. B. auf das Reifenprofil richten.

Werden die zu handhabenden Reifen 2 auf der Fördereinrichtung der Vorrichtung 1 immer mit der Seitenwand nach oben weisend transportiert, die die Informationen aufweist, so kann es genügen, wenn die Vorrichtung 1 zur Nutzung zum Identifizieren mit nur einer Kamera 20 ausgestattet ist, die, wie in **Fig. 6** gezeigt, förderabwärts der Gabelelemente 15,16 an einem Bügel 31 mittig über der mittleren Förderbahn 11 angeordnet ist, um mit dem Aufnahmefeld F den im unteren Bereich liegenden Seitenwandabschnitt des aufgestellten Reifens 2 zu erfassen. **Fig. 8** zeigt ein Beispiel, bei dem zu Beginn der Aufnahme die Kamera 20 einen Abschnitt der Reifenseitenwand mit der Information M über das Modell erfasst. Wird der Reifen 2 durch die hier nicht dargestellte Rolle 18, die im Uhrzeigersinn angetrieben wird, entgegen dem Uhrzeigersinn gedreht, wie durch den Pfeil angedeutet, wird nach einer siebenachtel Umdrehung ein Abschnitt des Reifens 2 im Aufnahmefeld F erfasst, der Informationen Z über das Alter des Reifens 2 zeigt, usw.

Mit der Drehung des Reifens 2 wird die Seitenwand mit den Informationen durch das Aufnahmefeld F der Kamera 20 geführt, sodass eine Bildfolge bzw. ein Bildstreifen erfasst wird, aus der/dem die Informationen ausgewertet werden können. Das Aufnahmefeld F der Kamera 20, das ein definiertes vergleichsweise kleines Bild erfasst, ist dabei so eingerichtet, dass unabhängig von der Reifengröße, Breite und Flankenhöhe des Reifens 2 (innerhalb einer Reifenklasse, wie z. B. PKW-Reifen) der Seitenwandabschnitt mit den Informationen immer erfasst wird.

Um beide Seitenwände erfassen zu können, falls die Lage der Seitenwand des Reifens 2 mit den Informationen auf der Fördereinrichtung variieren kann, oder falls eine gewünschte Information wie etwa der Markierungspunkt auf beiden Seiten angebracht sein kann, ist in der Ausführungsform der Erfindung wie in **Fig. 1 bis 4** zu sehen, zusätzlich eine zweite Kamera 22 vorgesehen, die förderaufwärts der Gabelelemente 15,16 an einem Bügel 33 mittig über der mittleren Förderbahn 11 angeordnet ist. Mit dieser Kamera 22 kann ebenfalls ein Aufnahmefeld eingerichtet werden, das einen Seitenwandabschnitt im unteren Bereich des aufgestellten Reifens 2 zwischen den Gabelelementen 15,16 erfasst, allerdings nun der Seitenwand, die an den Langschenkeln 15",16" anliegt. Das Erfassen der Informationen entspricht obigen Ausführungen in Bezug auf die förderabwärts angeordnete Kamera 20.

Die erfindungsgemäße Vorrichtung 1 weist ferner, wie in **Fig. 7** schematisch skizziert ist, eine Steuerungseinrichtung 23 auf, die mit der bzw. den Kamera(s) 20,22 und einem Antrieb 24 der drehbar angetriebenen Rolle 18 verbunden ist. Um die Zeitdauer der Bilderfassung mit den Kameras 20,22 zu optimieren, weist die Steuerungseinrichtung 23 ein Zeitsteuerungsmodul 25 auf, mit dem durch entsprechende Ansteuerung des Antriebs 24 der Rolle 18 eine vollständige Umdrehung des Reifens 2 gesteuert wird. Entsprechend wird der Antrieb 24 zum Anhalten der Rolle 18 nach erfolgter vollständiger Umdrehung des Reifens angesteuert. Vorzugsweise kann das Zeitsteuerungsmodul 25 als Zeitsteuerungs- und Synchronisierungsmodul 25 weitergebildet sein, um die Bilderfassung durch die Kamera 20,22 mit der Umdrehung des Reifens 2 zu synchronisieren, so dass die Bilderfassung durch die Kameras 20,22 und Auswertung durch die Bildverarbeitungseinrichtung EDV, die auf optischer Zeichenerkennung basiert, mit der Drehung des Reifens 2 gestartet und mit Abschluss der vollständigen Umdrehung beendet werden kann.

Eine Variante der Steuerung, die durch den gestrichelten Pfeil angedeutet wird, kann alternativ vorsehen, dass die Ansteuerung des Antriebs 24 zum Stoppen der Rolle 18 in Abhängigkeit der Informationen erfolgt, die durch die Auswertung der durch die Kamera 20,22 erfassten Bilddaten durch die Bildverarbeitungseinrichtung EDV erhalten werden. Handelt es sich bei der zur Identifizierung der Reifen 2 interessierenden Information beispielsweise um das Alter des Reifens 2, das aus der DOT-Nummer Z ermittelbar ist, so kann die Umdrehung des Reifens 2 gestoppt werden, sobald die DOT-Nummer Z erkannt wurde. Im Beispiel nach **Fig.** 8 wäre dies bei der indizierten Umdrehungsrichtung nach einer Siebenachtelumdrehung der Fall. Alternativ kann der Antrieb der Rolle 18 so angesteuert werden, dass der Reifen so gedreht wird, dass eine gewünschte Information auf der Seitenwand des Reifens 2, wie beispielsweise der Markierungspunkt, in einer bestimmten Lage zu liegen kommt, beispielsweise auf 12 Uhr.

Wie **Fig.** 7 schematisch zeigt, kann die Vorrichtung eine Lichtschranke 21 als Sensorvorrichtung haben, siehe auch **Fig. 5**. Die Lichtschranke 21 ist seitlich der Förderbahnen 10,11,12 an einem seitlichen Bügel 32 in einem Bereich angeordnet, der sich förderaufwärts nahe den in der ersten Position aus den Gassen 13 herausragenden Schenkeln 15',16' befindet, um den auf den Förderbahnen 10,11,12 angeförderten Reifen 2 zu erfassen, wenn oder kurz bevor dieser an den Schenkeln 15',16' anliegt. Dabei ist die Lichtschranke 21 mit der Steuerungseinrichtung 23 verbunden, die zudem hier mit der Hubeinrichtung aus Hubzylinder 34 und Hubstange 36 verbunden ist, um die Hubeinrichtung zum Verschwenken der Gabelelemente 15,16 in die zweite Position anzusteuern, wenn ein angeförderter Reifen 2 die Lichtschranke 21 passiert.

Zusätzlich kann die Steuerungseinrichtung 23 mit einem Antrieb 37 der Förderbahnen 10,11,12 verbunden sein, um den Antrieb 37 zum Anhalten der Förderbahnen 10,11,12 anzusteuern, wenn durch die Lichtschranke 21 ein angeförderter Reifen 2 erfasst wird und das Verschwenken der Gabelelemente 15,16 gestartet wird.

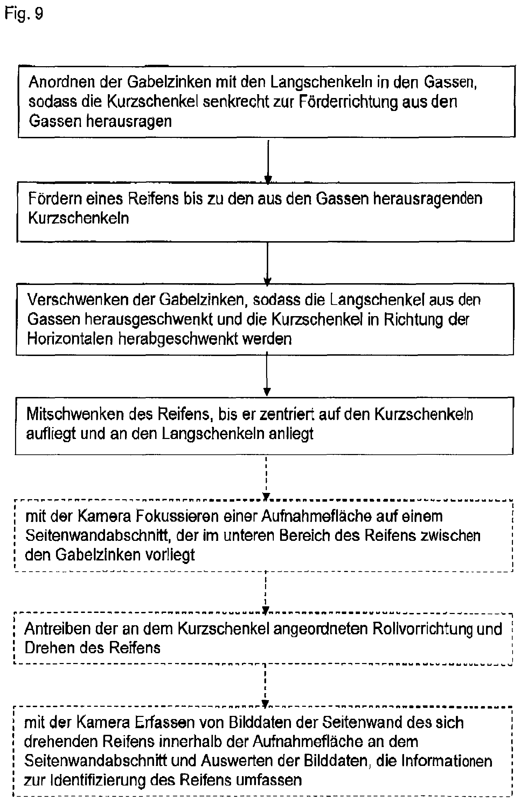

**Fig.** 9 zeigt schließlich die Kernschritte eines erfindungsgemäßen Verfahrens, das mit der erfindungsgemäßen Vorrichtung 1 zum Identifizieren von Reifen 2 durchgeführt werden kann. Durch die Steuerungseinrichtung können alle Schritte automatisiert ablaufen, das muss aber nicht sein - generell kann die Vorrichtung auch zum reinen Sichten der Reifen per Augenmaß genutzt werden, oder, um die Reifen einer manuellen Behandlung zu unterziehen - dann braucht es auch keine Kamera.

Zunächst werden die Gabelelemente 15,16 in der ersten Position angeordnet, in der die Schenkel 15",16" parallel zu der Förderrichtung in den Gassen 13 liegen und die anderen Schenkel 15',16', die förderabwärts an den ersten Schenkeln 15",16" vorliegen, senkrecht zur Förderrichtung aus den Gassen 13 herausragen. Ein Reifen 2 wird auf den drei parallel zueinander angeordneten Förderbahnen 10,11,12 bis zu den aus den Gassen 13 herausragenden Kurzschenkeln 15',16' gefördert, wo der Reifen 2 bereits in Bezug auf die Längsachse der Fördereinrichtung zentriert wird. Sodann werden die Gabelelemente 15,16 in die zweite Position verschwenkt, in der die zweiten Schenkel 15",16" aus den Gassen 13 herausgeschwenkt und die ersten Schenkel 15',16' in Richtung der Horizontalen herabgeschwenkt sind, wobei der Reifen 2 mitgeschwenkt wird, bis er in der zweiten Position der Gabelelement 15,16 auf den ersten Schenkeln 15',16' aufliegt, auch hierbei zentriert wird, und an den zweiten Schenkeln 15",16" anliegt. Der aufgestellte Reifen 2 kann der gewünschten Aktion unterzogen werden - diese kann auch das Inspizieren/ Identifizieren sein: In diesem Fall, dessen Schritte in **Fig. 9** durch Strichelierungen verdeutlicht sind, folgt dann der Schritt des Fokussierens eines Aufnahmefelds F auf einem Abschnitt der Seitenwand, der in einem unteren Bereich des Reifens 2 zwischen den Gabelelementen 15,16 vorliegt, mit der mittig oberhalb der mittleren Förderbahn 11 angeordneten Kamera 20,22, die auf den Seitenwandabschnitt des Reifens 2 ausgerichtet ist, zu diesem Zeitpunkt.

Die Kamera 20,22 kann jedoch auch schon von Beginn an entsprechend eingestellt und eingerichtet werden. Während die drehbar angetriebene Rolle 18 an dem Schenkel 15' zum Drehen des Reifens angetrieben wird, werden Bilddaten der Seitenwand des sich drehenden Reifens 2 innerhalb des Aufnahmefelds F an dem Seitenwandabschnitt mit der Kamera 20,22 erfasst und die erhaltenen Bilddaten der Reifenseitenwand ausgewertet, die Informationen zur Identifizierung des Reifens 2 umfassen. Die Auswertung der Bilddaten erfolgt mittels einer optischen Zeichenerkennung. Ist der Reifen 2 anhand der erfassten Information identifiziert, wird er von den Gabelelementen 15,16 entfernt, die dann wieder zurück in die erste Position verschwenkt werden, sodass der nächste Reifen 2 über die Förderbahnen 10,11,12 zur Durchführung des Verfahrens angefördert werden kann.

### BEZUGSZEICHENLISTE

- 1: Vorrichtung
- 2: Reifen
- 3: Rahmen
- 5: Einzelkörper
- 10,11,12: Förderbahnen
- 13: Gasse
- 14: Gabelträger
- 15,16: Gabelelement
- 15',16': Erster Schenkel
- 15",16": Zweiter Schenkel
- 17: Verbindungspunkt
- 17': Schwenkhebel
- 18: drehbar angetriebene Rollvorrichtung
- 19,19': Rollvorrichtung, rutschhemmende Beschichtung
- 20,22: Kamera
- 21: Lichtschranke
- 23: Steuerungsvorrichtung
- 24: Antrieb Rollvorrichtung
- 25: Zeitsteuerung-/Synchronisierungsmodul
- 31,32,33: Bügel
- 34: Hubzylinder
- 35: Umlenkwelle
- 36: Hubstange
- 37: Antrieb Förderbahnen
- a: Förderrichtung
- S: Schwenkachse
- F: Aufnahmefeld
- H,G,Tg,Z,M,K,E: Reifeninformationen

## Patentansprüche

1. Vorrichtung (1) zum Handhaben von Reifen (2), die eine Reifenfördereinrichtung zum Fördern der Reifen (2) aufweist,
**wobei**
die Reifenfördereinrichtung drei parallel zueinander angeordnete Förderbahnen (10,11,12) aufweist, die durch jeweils eine Gasse (13) zwischen einer der äußeren Förderbahnen (10,12) und der mittleren Förderbahn (11) quer zur Förderrichtung (a) voneinander beabstandet sind,
**dadurch gekennzeichnet, dass** und die Vorrichtung (1) zwei zueinander parallele Gabelelemente (15,16) aufweist, die einen ersten Schenkel (15',16') und einen zweiten Schenkel (15",16") aufweisen, wobei durch den Verbindungspunkt (17) der jeweils zwei Schenkel (15',16',15",16") eine gemeinsame Schwenkachse (S) der Gabelelemente (15,16) verläuft, und dass, in jeder der Gassen (13) jeweils eines der Gabelelemente (15,16) um den Verbindungspunkt schwenkbar derart angeordnet ist, dass
- in einer ersten Position jeweils der zweite Schenkel (15",16") jedes der Gabelelemente (15,16) in einer Förderbahnen-Ebene aufgenommen ist, und
- in einer zweiten Position beide Schenkel (15',16',15",16") jedes der Gabelelemente (10,11,12) sich aus der Förderbahnen-Ebene herauserstrecken, und dass, zumindest der erste Schenkel (15',16') jedes Gabelelements auf der dem jeweils zugehörigen zweiten Schenkel (15",16") zugewandten Seite eine Rolle (18,19) aufweist, deren Drehachse parallel zu dem zugehörigen Schenkel (15',16', 15",16") verläuft, wobei zumindest eine Rolle (18) eines ersten Schenkels (15',16') angetrieben ist.

2. Vorrichtung (1) nach Anspruch 1
**dadurch gekennzeichnet, dass**
der erste Schenkel (15',16') und der zweite Schenkel (15",16") jedes Gabelelementes (15,16) einen Winkel im Bereich von 80° bis 100°, bevorzugt 90°, aufspannen, und dass bevorzugt
- der Verbindungspunkt durch eine Kante (17) gebildet wird,
- der erste Schenkel (15',16') ein Kurzschenkel (15',16') und der zweite Schenkel (15", 16") ein Langschenkel (15",16") ist,
- in der ersten Position die Langschenkel (15",16") parallel zu der Förderrichtung (a) in den Gassen (13) liegen und die Kurzschenkel (15',16'), die bezüglich der Förderrichtung (a) förderabwärts an den Langschenkeln (15",16") vorliegen, senkrecht zur Förderrichtung (a) aus den Gassen (13) herausragen, und wobei weiter bevorzugt zwischen der ersten und der zweiten Position ein Schwenkwinkel in einem Bereich von 60° bis 90° liegt.

3. Vorrichtung (1) nach Anspruch 1 oder 2,
**dadurch gekennzeichnet, dass**
alle Schenkel (15',16',15",16"), auf der dem jeweils zugehörigen ersten bzw. zweiten Schenkel (15', 15", 16', 16") zugewandten Seite eine Rolle (18,19) aufweisen, deren Drehachse parallel zu dem zugehörigen Schenkel (15',16', 15",16") verläuft.

4. Vorrichtung (1) nach zumindest einem der Ansprüche 1 bis 3,
**dadurch gekennzeichnet, dass**
die Gabelelemente (15,16) ein gemeinsames Betätigungselement aufweisen und/oder dass die Gabelelemente (15,16) miteinander zu einem Gabelträger (14) verbunden sind.

5. Vorrichtung (1) nach Anspruch 4,
**dadurch gekennzeichnet, dass**
das gemeinsame Betätigungselement ein Schwenkhebel (17') ist, der operativ mit einer Hubstange (36) verbunden ist, die verfahrbar in einem Hubzylinder (34) geführt wird, der schwenkbar mit einem Rahmen (3) der Reifenfördereinrichtung verbunden ist.

6. Vorrichtung (1) nach zumindest einem der Ansprüche 1 bis 5,
**dadurch gekennzeichnet, dass**
die Förderbahnen (10,11,12) Förderbänder (10,11,12) mit einer Vielzahl beweglich gelagerter Einzelkörper (5) sind, die Kugeln oder vorzugsweise Zylinder sind, wobei eine Drehachse der Einzelkörper (5) parallel zur Förderrichtung (a) verläuft.

7. Vorrichtung (1) nach zumindest einem der Ansprüche 1 bis 6,
**dadurch gekennzeichnet, dass**
die ersten Schenkel (15',16') eine Länge aufweisen, die größer gewählt ist als die größte Breite eines mit der Vorrichtung (1) handhabbaren vorbestimmten Reifens (2), und die zweiten Schenkel (15",16") eine Länge aufweisen, die entsprechend so oder größer gewählt ist als der größte Durchmesser eines mit der Vorrichtung (1) handhabbaren vorbestimmten Reifens (2), wobei vorzugsweise ein Abstand zwischen den Gassen (13) und entsprechend zwischen den Gabelelementen (15,16) kleiner gewählt ist als der kleinste Durchmesser eines mit der Vorrichtung (1) handhabbaren vorbestimmten Reifens (2);
oder dass der Abstand zwischen den Gassen (13) und der Abstand zwischen den Gabelelementen (15,16) verstellbar sind.

8. Vorrichtung (1) nach zumindest einem der Ansprüche 1 bis 7,
**dadurch gekennzeichnet, dass**
die Gabelelemente (15,16)
- in eine dritte Position verschwenkbar sind, in der die zweiten Schenkel (15",16") um einen Winkel größer als 90° aus den Gassen (13) herausgeschwenkt sind, und/oder
- in einer vertikalen Richtung verfahrbar sind.

9. Vorrichtung (1) nach zumindest einem der Ansprüche 1 bis 8,
**dadurch gekennzeichnet, dass**
die Vorrichtung (1) zumindest eine Kamera (20,22) und eine damit verbundene Bildverarbeitungseinrichtung aufweist, wobei bevorzugt die zumindest eine Kamera (20,22) so angeordnet und ausgerichtet ist, dass ein mit der Kamera (20,22) fokussierbares Aufnahmefeld (F) auf einen vorbestimmten Abschnitt einer Seitenwand des vorbestimmten Reifens (2) ausgerichtet ist, der auf dem in der zweiten Position befindlichen Gabelelement (15,16) anordenbar ist.

10. Vorrichtung (1) nach Anspruch 9,
**dadurch gekennzeichnet, dass**
die eine Kamera (20,22) oberhalb der mittleren Förderbahn (11) förderabwärts oder förderaufwärts zu dem Gabelelement (15,16) angeordnet ist, oder
eine erste Kamera (20) förderabwärts zu dem Gabelelement (15,16) und eine zweite Kamera (22) förderaufwärts zu dem Gabelelement (15,16) angeordnet ist.

11. Vorrichtung (1) nach zumindest einem der vorstehenden Ansprüche 4 bis 10,
**dadurch gekennzeichnet, dass**
die Vorrichtung eine Steuerungseinrichtung (23) aufweist, die mit dem Betätigungselement und/oder mit einem Antrieb (37) der Förderbahnen (10,11,12) verbunden ist, um das Verschwenken der Gabelelemente (15,16) in die zweite Position anzusteuern und/oder um den Antrieb (37) der Förderbahnen (10,11,12) anzusteuern, wobei bevorzugt die Steuerungseinrichtung (23) ein Zeitsteuerungs- und/oder Synchronisierungsmodul (25) aufweist.

12. Vorrichtung (1) nach Anspruch 11,
**dadurch gekennzeichnet, dass**
die Steuerungseinrichtung (23) mit
- der zumindest einen Kamera oder den Kameras (20,22) und/oder mit
- einem Antrieb (24) der drehbar angetriebenen Rolle (19) verbunden ist.

13. Vorrichtung (1) nach Anspruch 11 oder 12,
**dadurch gekennzeichnet, dass**
die Vorrichtung eine Sensorvorrichtung aufweist, die vorzugsweise eine Lichtschranke (21) ist und die förderaufwärts im Bereich der ersten Schenkel (15',16'), in der ersten Position, angeordnet und mit der Steuerungseinrichtung (23) verbunden ist.

14. Verfahren zum Handhaben von Reifen (2) unter Verwendung einer Vorrichtung (1) nach zumindest einem der Ansprüche 1 bis 13,
**umfassend die Schritte**
- Anordnen der Gabelelemente (15,16) in der ersten Position,
- Positionieren eines Reifens (2) auf den drei parallel zueinander angeordneten Förderbahnen (10,11,12) und Fördern des Reifens (2) bis zu den aus den Gassen (13) herausragenden ersten Schenkeln (15',16'),
- Verschwenken der Gabelelemente (15,16) in die zweite Position, dabei
- Mitschwenken des Reifens (2), bis er sich in der zweiten Position der Gabelelemente (15,16) auf den ersten Schenkeln (15',16') abstützt, dabei zentriert wird und an den zweiten Schenkeln (15",16") anliegt.
- Ausführen einer Handhabungs-Tätigkeit an dem Reifen, und
- Abfördern des Reifens.

15. Verfahren zum Handhaben von Reifen (2) unter Verwendung einer Vorrichtung (1) nach zumindest einem der Ansprüche 1 bis 13, wobei die Handhabungs-Tätigkeit das Identifizieren von Reifen ist,
**umfassend die Schritte**
- nach dem Mitschwenken des Reifens (2), bis er sich in der zweiten Position der Gabelelemente (15,16) auf den ersten Schenkeln (15',16') abstützt, dabei zentriert wird und an den zweiten Schenkeln (15",16") anliegt,
- Fokussieren eines Aufnahmefelds (F) auf einem Abschnitt der Seitenwand, der in einem unteren Bereich des Reifens (2) zwischen den Gabelelementen (15,16) vorliegt, mit der zumindest einen Kamera (20,22), die auf den Seitenwandabschnitt des Reifens (2) ausgerichtet ist, und
- Antreiben der zumindest einen an dem Kurzschenkel (16') angeordneten, drehbar angetriebenen Rollvorrichtung (18) und Drehen des Reifens (2), dabei
- Erfassen von Bilddaten der Seitenwand des sich drehenden Reifens (2) innerhalb des Aufnahmefelds (F) an dem Seitenwandabschnitt mit der zumindest einen Kamera (20,22) und Auswerten der Bilddaten, die Informationen zur Identifizierung des Reifens (2) umfassen.

## Claims

1. A device (1) for handling tires (2), which has a tire conveying means for conveying the tires (2), wherein
the tire conveying means has three conveyor tracks (10, 11, 12), which are arranged parallel to one another and which are spaced apart from one another by means of a respective lane (13) between one of the outer conveyor tracks (10, 12) and the middle conveyor track (11) transversely to the conveying direction (a),
**characterized in that**
the device (1) has two fork elements (15, 16), which are parallel to one another and which have a first leg (15', 16') and a second leg (15", 16"), wherein a common pivot axis (S) of the fork elements (15, 16) runs through the connecting point (17) of the respective two legs (15', 16', 15", 16"), and that
one of the respective fork elements (15, 16) is arranged in each of the lanes (13) so as to be capable of being pivoted about the connecting point in such a way that
- in a first position, the second leg (15", 16") of each of the fork elements (15, 16) is in each case received in a conveyor track plane, and
- in a second position, both legs (15', 16', 15", 16") of each of the fork elements (10, 11, 12) extend out of the conveyor track plane, and that
at least the first leg (15', 16') of each fork element has a roller (18, 19) on the side facing the respective associated second leg (15", 16"), the axis of rotation of which roller runs parallel to the associated leg (15', 16', 15", 16"), wherein at least one roller (18) of a first leg (15', 16') is driven.

2. The device (1) according to claim 1,
**characterized in that**
the first leg (15',16') and the second leg (15",16") of each fork element (15,16) span an angle in the range of from 80° to 100°, preferably 90°, and that preferably
- the connecting point is formed by an edge (17),
- the first leg (15',16') is a short leg (15',16') and the second leg (15", 16") is a long leg (15",16"),
- in the first position, the long legs (15",16") are located parallel to the conveying direction (a) in the lanes (13), and the short legs (15',16'), which are present downstream on the long legs (15", 16") relative to the conveying direction (a), protrude perpendicular to the conveying direction (a) from the lanes (13), and wherein more preferably a pivot angle in a range of from 60° to 90° lies between the first and the second position.

3. The device (1) according to claim 1 or 2,
**characterized in that**
all legs (15', 16', 15", 16") have a roller (18, 19) on the side facing the respective associated second leg (15", 16"), the axis of rotation of which roller runs parallel to the associated leg (15', 16', 15", 16").

4. The device (1) according to at least any one of claims 1 to 3,
**characterized in that**
the fork elements (15,16) have a common actuating element and/or that the fork elements (15,16) are connected to one another to form a fork support (14).

5. The device (1) according to claim 4,
**characterized in that**
the common actuating element is a pivot lever (17'), which is operatively connected to a lifting rod (36), which is displaceably guided in a lifting cylinder (34), which is pivotably connected to a frame (3) of the tire conveying means.

6. The device (1) according to at least any one of claims 1 to 5,
**characterized in that**
the conveyor tracks (10, 11, 12) are conveyor belts (10, 11, 12) comprising a plurality of movably supported individual bodies (5), which are spheres or preferably cylinders, wherein an axis of rotation of the individual bodies (5) runs parallel to the conveying direction (a).

7. The device (1) according to at least any one of claims 1 to 6,
**characterized in that**
the first legs (15',16') have a length, which is selected to be larger than the largest width of a predetermined tire (2), which can be handled with the device (1), and the second legs (15",16") have a length, which is accordingly selected such as or larger than the largest diameter of a predetermined tire (2), which can be handled with the device (1), wherein a distance between the lanes (13) and therefore between the fork elements (15, 16) is preferably selected to be smaller than the smallest diameter of a predetermined tire (2), which can be handled with the device (1);
or that the distance between the lanes (13) and the distance between the fork elements (15,16) can be adjusted.

8. The device (1) according to at least any one of claims 1 to 7,
**characterized in that**
the fork elements (15,16)
- can be pivoted into a third position, in which the second legs (15",16") are pivoted out of the lanes (13) about an angle of larger than 90°, and/or
- can be displaced in a vertical direction.

9. The device (1) according to at least any one of claims 1 to 8,
**characterized in that**
the device (1) has at least one camera (20,22) and an image processing means connected thereto, wherein
the at least one camera (20,22) is preferably arranged and aligned in such a way that a recording field (F), which can be focused by means of the camera (20, 22) is aligned with a predetermined portion of a side wall of the predetermined tire (2), which can be arranged on the fork element (15, 16), which is located in the second position.

10. The device (1) according to claim 9,
**characterized in that**
the one camera (20,22) is arranged above the middle conveyor track (11) downstream from or upstream of the fork element (15, 16), or
a first camera (20) is arranged downstream from the fork element (15,16), and a second camera (22) is arranged upstream of the fork element (15,16).

11. The device (1) according to at least any one of the preceding claims 4 to 10,
**characterized in that**
the device has a control means (23), which is connected to the actuating element and/or to a drive (37) of the conveyor tracks (10,11,12), in order to control the pivoting of the fork elements (15, 16) into the second position and/or in order to control the drive (37) of the conveyor tracks (10,11,12), wherein the control means (23) preferably has a time control and/or synchronization module (25).

12. The device (1) according to claim 11,
**characterized in that**
the control means (23) is connected to
- the at least one camera or the cameras (20, 22) and/or to
- a drive (24) of the rotatably driven roller (19).

13. The device (1) according to claim 11 or 12,
**characterized in that**
the device has a sensor device, which is preferably a light barrier (21) and which, in the first position, is arranged upstream in the region of the first legs (15', 16'), and is connected to the control means (23).

14. A method for handling tires (2) using a device (1) according to at least any one of claims 1 to 13,
**comprising the steps of**
- arranging the fork elements (15, 16) in the first position,
- positioning a tire (2) on the three conveyor tracks (10, 11, 12), which are arranged parallel to one another, and conveying the tire (2) up to the first legs (15', 16'), which protrude from the lanes (13),
- pivoting the fork elements (15, 16) into the second position, thereby
- pivoting along the tire (2), until it is supported on the first legs (15', 16') in the second position of the fork elements (15, 16), is centered thereby, and abuts on the second legs (15", 16"),
- performing a handling task on the tire, and
- conveying away the tire.

15. A method for handling tires (2) using a device (1) according to at least any one of claims 1 to 13, wherein the handling task is the identification of tires,
**comprising the steps of**
- after the tire (2) is pivoted along until it is supported on the first legs (15', 16') in the second position of the fork elements (15, 16), is centered thereby, and abuts on the second legs (15", 16"),
- focusing a recording field (F) on a portion of the side wall, which is present in a lower region of the tire (2) between the fork elements (15, 16), by means of the at least one camera (20, 22), which is aligned with the side wall portion of the tire (2), and
- driving the at least one rotatably driven rolling device (18), which is arranged on the short leg (16'), and rotating the tire (2), thereby
- capturing image data of the side wall of the rotating tire (2) within the recording field (F) on the side wall portion by means of the at least one camera (20, 22), and evaluating the image data comprising information for identifying the tire (2).

## Revendications

1. Dispositif (1) de manutention de pneus (2), lequel présente un convoyeur de pneus pour le transport des pneus (2),
le convoyeur de pneus présentant trois voies de convoyage (10, 11, 12) disposées parallèlement les unes aux autres, lesquelles sont respectivement espacées par un intervalle (13) entre l'une des voies de convoyage extérieures (10, 12) et la voie de convoyage centrale (11) transversalement au sens de convoyage (a),
**caractérisé en ce que**
le dispositif (1) présente deux éléments de fourche (15, 16) parallèles qui présentent un premier côté (15', 16') et un deuxième côté (15", 16"), un axe de pivotement (S) commun des éléments de fourche (15, 16) passant par le point de liaison (17) des deux côtés (15', 16', 15", 16") et
**en ce que**
dans chacun des intervalles (13), un des éléments de fourche (15, 16) est disposé de manière pivotante autour du point de liaison de telle sorte que
- dans une première position, le deuxième côté (15", 16") de chacun des éléments de fourche (15, 16) soit respectivement logé dans un niveau de voie de convoyage et
- dans une deuxième position, les deux côtés (15', 16', 15", 16") de chacun des éléments de fourche (10, 11, 12) s'étendent depuis le niveau de voie de convoyage et **en ce que**
au moins le premier côté (15', 16') de chaque élément de fourche présente, sur la face tournée vers le deuxième côté (15", 16") correspondant, un galet (18, 19) dont l'axe de rotation est parallèle au côté correspondant (15', 16', 15", 16"), au moins un galet (18) d'un premier côté (15', 16') étant entraîné.

2. Dispositif (1) conformément à la revendication n°1,
**caractérisé en ce que**
le premier côté (15', 16') et le deuxième côté (15", 16") de chaque élément de fourche (15, 16) présentent un angle de l'ordre de 80° à 100°, préférablement de 90°, et que préférablement
- le point de liaison est formé par une arête (17),
- le premier côté (15', 16') est un côté court (15', 16') et le deuxième côté (15", 16") est un côté long (15", 16"),
- dans la première position, les côtés longs (15", 16") sont parallèles au sens de convoyage (a) dans les intervalles (13) et les côtés courts (15', 16') qui descendent sur les côtés longs (15", 16") par rapport au sens de convoyage (a), dépassent des intervalles (13) perpendiculairement au sens de convoyage (a), et plus préférablement un angle de pivotement étant de l'ordre de 60° à 90° entre la première et la deuxième position.

3. Dispositif (1) conformément à la revendication n°1 ou n°2,
**caractérisé en ce que**
tous les côtés (15', 16', 15", 16") présentent, sur la face tournée vers le premier et/ou le deuxième côté (15', 15", 16', 16") correspondant, un galet (18, 19) dont l'axe de rotation est parallèle au côté correspondant (15', 16', 15", 16").

4. Dispositif (1) conformément au moins à l'une des revendications n°1 à n°3,
**caractérisé en ce que**
les éléments de fourche (15, 16) présentent un élément d'actionnement commun et/ou **en ce que** les éléments de fourche (15, 16) sont reliés entre eux en un porte-fourche (14).

5. Dispositif (1) conformément à la revendication n°4,
**caractérisé en ce que**
l'élément d'actionnement commun est un levier pivotant (17') qui est relié opérationnellement à une tige de levage (36), laquelle est guidée en étant déplaçable dans un vérin (34) qui est relié par pivotement à un châssis (3) du convoyeur de pneus.

6. Dispositif (1) conformément au moins à l'une des revendications n°1 à n°5,
**caractérisé en ce que**
les voies de convoyage (10, 11, 12) sont des bandes transporteuses (10, 11, 12) comportant un grand nombre de parties séparées (5) montées de manière mobile, lesquelles sont des billes ou préférablement des vérins, un axe de rotation des parties séparées (5) étant parallèle au sens de convoyage (a).

7. Dispositif (1) conformément au moins à l'une des revendications n°1 à n°6,
**caractérisé en ce que**
les premiers côtés (15', 16') présentent une longueur choisie supérieure à la largeur maximale d'un pneu (2) prédéterminé, pouvant être manié au moyen du dispositif (1), et les deuxièmes côtés (15", 16") présentent une longueur choisie équivalente ou supérieure au diamètre maximal d'un pneu (2) prédéterminé, pouvant être manié au moyen du dispositif (1), préférablement une distance entre les intervalles (13) et, en conséquence, entre les éléments de fourche (15, 16), étant choisie plus petite que le diamètre minimal d'un pneu (2) prédéterminé, pouvant être manié au moyen du dispositif (1),
ou **en ce que** la distance entre les intervalles (13) et la distance entre les éléments de fourche (15, 16) sont réglables.

8. Dispositif (1) conformément au moins à l'une des revendications n°1 à n°7,
**caractérisé en ce que**
les éléments de fourche (15, 16)
- sont pivotants dans une troisième position dans laquelle les deuxièmes côtés (15", 16") sont pivotés en dehors des intervalles (13) d'un angle supérieur à 90° et/ou
- sont déplaçables dans un sens vertical.

9. Dispositif (1) conformément au moins à l'une des revendications n°1 à n°8,
**caractérisé en ce que**
le dispositif (1) présente une caméra (20, 22) et un dispositif de traitement des images connecté à celle-ci, préférablement
au moins une caméra (20, 22) étant disposée et orientée de telle manière à ce qu'un champ d'enregistrement (F) focalisable avec la caméra (20, 22) soit orienté vers une section prédéterminée d'une paroi latérale du pneu (2) prédéterminé, pouvant être disposé sur l'élément de fourche (15, 16) qui se trouve dans la deuxième position.

10. Dispositif (1) conformément à la revendication n°9,
**caractérisé en ce que**
une caméra (20, 22) est disposée au-dessus de la voie de convoyage centrale (11) en descente ou en montée par rapport à l'élément de fourche (15, 16) ou
une première caméra (20) est disposée en descente par rapport à l'élément de fourche (15, 16) et une deuxième caméra (22) est disposée en montée par rapport à l'élément de fourche (15, 16).

11. Dispositif (1) conformément au moins à l'une des revendications précédentes n°4 à n°10,
**caractérisé en ce que**
le dispositif présente une unité de commande (23) qui est reliée à l'élément d'actionnement et/ou à un entraînement (37) des voies de convoyage (10, 11, 12) afin de piloter le pivotement des éléments de fourche (15, 16) dans la deuxième position et/ou de piloter l'entraînement (37) des voies de convoyage (10, 11, 12), l'unité de commande (23) présentant préférablement un module de contrôle du temps et/ou de synchronisation (25).

12. Dispositif (1) conformément à la revendication n°11,
**caractérisé en ce que**
l'unité de commande (23) est reliée
- au moins à une caméra ou aux caméras (20, 22) et/ou
- à un entraînement (24) du galet (19) entraîné en rotation.

13. Dispositif (1) conformément à la revendication n°11 ou n°12,
**caractérisé en ce que**
le dispositif présente un dispositif détecteur qui est préférablement une barrière photoélectrique (21) et qui est disposé en montée dans la zone des premiers côtés (15', 16') dans la première position et qui est relié à l'unité de commande (23).

14. Procédé de manutention de pneus (2) avec l'utilisation d'un dispositif (1) conformément au moins à l'une des revendications n°1 à n°13,
comprenant les étapes
- disposition des éléments de fourche (15, 16) dans la première position,
- positionnement d'un pneu (2) sur les trois voies de convoyage (10, 11, 12) disposées en parallèle et transport du pneu (2) jusqu'aux premiers côtés (15', 16') dépassant des intervalles (13),
- pivotement des éléments de fourche (15, 16) dans la deuxième position avec
- co-pivotement du pneu (2) jusqu'à ce qu'il s'appuie sur les premiers côtés (15', 16') dans la deuxième position des éléments de fourche (15, 16), soit centré et repose sur les deux côtés (15", 16").
- exécution d'une activité de manutention sur le pneu et
- transfert du pneu.

15. Procédé de manutention de pneus (2) avec l'utilisation d'un dispositif (1) conformément au moins à l'une des revendications n°1 à n°13, l'activité de manutention étant l'identification de pneus,
comprenant les étapes
- après le co-pivotement du pneu (2) jusqu'à ce qu'il s'appuie sur les premiers côtés (15', 16') dans la deuxième position des éléments de fourche (15, 16), soit centré et repose sur les deux côtés (15", 16").
- focalisation d'un champ d'enregistrement (F) sur une section de la paroi latérale qui se trouve dans une zone inférieure du pneu (2) entre les éléments de fourche (15, 16), avec au moins une caméra (20, 22) qui est orientée vers la section de la paroi latérale du pneu (2) et
- actionnement au moins d'un dispositif de roulement (18) disposé sur le côté court (16'), entraîné de manière rotative, et rotation du pneu (2) avec
- enregistrement des données d'image de la paroi latérale du pneu (2) en rotation dans le champ d'enregistrement (F) sur la section de la paroi latérale avec au moins une caméra (20, 22) et évaluation des données d'image, lesquelles englobent des informations sur l'identification du pneu (2).
